(19) Europäisches Patentamt
European Patent Office
Office européen des brevets

(11) **EP 3 234 638 B1**

(12) **FASCICULE DE BREVET EUROPEEN**

(45) Date de publication et mention
de la délivrance du brevet:
**31.10.2018 Bulletin 2018/44**

(21) Numéro de dépôt: **15794531.2**

(22) Date de dépôt: **10.11.2015**

(51) Int Cl.:
*G01S 13/28* (2006.01)    *G01S 13/44* (2006.01)
*G01S 7/40* (2006.01)    *G01S 7/32* (2006.01)
*G01S 7/292* (2006.01)

(86) Numéro de dépôt international:
**PCT/EP2015/076233**

(87) Numéro de publication internationale:
**WO 2016/096250 (23.06.2016 Gazette 2016/25)**

(54) **PROCÉDÉ DE DÉTERMINATION DE PARAMÈTRES D'UN FILTRE DE COMPRESSION ET RADAR MULTIVOIES ASSOCIÉ**

VERFAHREN ZUR BESTIMMUNG VON PARAMETERN EINES KOMPRESSIONSFILTERS UND ZUGEHÖRIGES MEHRKANALRADAR

METHOD FOR DETERMINING PARAMETERS OF A COMPRESSION FILTER AND ASSOCIATED MULTICHANNEL RADAR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2014 FR 1402930**

(43) Date de publication de la demande:
**25.10.2017 Bulletin 2017/43**

(73) Titulaire: **Thales**
**92400 Courbevoie (FR)**

(72) Inventeurs:
• **COTTRON, Rodolphe**
**33600 Pessac (FR)**
• **HODE, Jean-Michel**
**33600 Pessac (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**US-A- 5 014 064**    **US-A- 5 208 563**
**US-A1- 2005 190 100**    **US-A1- 2010 194 626**

**Description**

La présente invention concerne le domaine de la compression d'impulsion. La présente invention concerne plus particulièrement un procédé de détermination de paramètres d'un filtre de compression, un procédé de compression d'impulsion et un radar multivoies associé.

La compression d'impulsion est une technique de traitement du signal utilisée dans le domaine du radar afin d'augmenter la résolution en distance de la mesure ainsi que le rapport signal sur bruit. L'idée générale est d'obtenir une impulsion longue, afin de conserver une énergie suffisante à la réception, sans pour autant sacrifier la résolution par rapport à une impulsion courte de puissance équivalente.

Son principe est le suivant: on génère un signal dont le support temporel est relativement long pour maximiser l'énergie émise. Cependant, on module ce signal de telle manière qu'après un filtrage adapté, l'inter-corrélation entre le signal reçu et les différentes fréquences du signal émis permet de résoudre les signaux de retours de plusieurs cibles qui pourraient se chevaucher à l'intérieur de la distance que représente la longueur de l'impulsion. Comme chaque partie de l'impulsion a sa propre fréquence, les retours issus de chaque cible sont complètement séparés.

Afin d'exploiter les différentes voies des radars multivoies, par exemple pour le traitement monopulse, il est nécessaire d'équilibrer le gain et la phase de chacune des voies de réception. Pour des radars bande étroite pour lesquels on peut supposer que la réponse de la chaîne de réception est uniforme dans la bande instantanée, la mesure de gain et de phase différentiels peut être effectuée simplement à partir d'un signal de référence à onde continue (CW) réinjecté sur chaque fréquence d'émission à laquelle est amené à travailler le radar.

Dans le cadre des radars haute résolution, le gain ne peut plus être supposé constant sur la bande instantanée du radar et le principe de compensation utilisé en bande étroite ne convient plus. De plus, les radars large bande utilisent généralement des formes d'onde à compression d'impulsion, et la variation de gain, en amplitude et phase, à l'intérieur de la bande instantanée induit une dégradation des lobes secondaires en sortie du traitement de compression d'impulsion destiné à optimiser le compromis entre la probabilité de détection et le taux de fausse alarme.

Dans les solutions connues, on cherche généralement à effectuer un traitement linéaire, par filtrage, à réponse impulsionnelle finie (ou FIR pour *Finite Impulse Response* selon la terminologie anglo saxonne) dans le but de maximiser la probabilité de détection et de minimiser le taux de fausse alarme. Lorsque le bruit est blanc on peut démontrer que la réalisation de ces deux optima revient à maximiser le rapport signal sur bruit ; dans ce cas, le filtre optimum, dit adapté, est celui dont la réponse en fréquence est le complexe conjugué de la densité spectrale du signal.

Si le bruit n'est pas blanc, on considèrera que l'on cherche toujours à maximiser le rapport signal sur bruit. On peut alors se ramener au cas précédent en utilisant préalablement un filtre de blanchiment du bruit, le filtre adapté étant alors la cascade des deux filtres. Cependant le filtre de blanchiment n'est en général pas réalisable, car non causal et de durée infinie. On ne peut donc en avoir qu'une approximation.

Le filtre optimum (en terme de signal à bruit) de dimension finie égale à celle du signal a pour réponse $\Gamma^{-1} s^*(-t)$ où $\Gamma$ est la restriction à la durée du signal de la matrice de corrélation en puissance du bruit. Si le bruit d'entrée dans la chaîne de réception est blanc et si la durée du signal était infinie alors $\Gamma^{-1}$ correspondrait à l'inverse de la réponse en puissance de la chaîne c'est à dire à l'égalisation en puissance du signal reçu. La durée étant finie, $\Gamma^{-1}$ n'est que la meilleure approximation finie de cette égalisation (vis à vis du signal à bruit).

$\Gamma^{-1}$ n'est pas mesurable dans la pratique à partir d'une mesure sur bruit. Par ailleurs, la réponse exacte du signal émis n'est pas non plus exactement connue, car elle comprend les défauts introduits par la chaîne d'émission.

On cherche donc à réaliser une approximation de l'opération décrite $\Gamma^{-1}s^*(-t)$ à partir d'une mesure sur signal (supposée raisonnablement exempte de bruit par l'intermédiaire d'une moyenne cohérente).

Par ailleurs, il est connu que, dans le cas d'impulsions dispersives à modulation de fréquence linéaire le signal obtenu après filtrage adapté présente des rebonds naturels dont le niveau (13 dB pour les plus proches) peut masquer d'autres cibles. Pour réduire le niveau de ces lobes, il est habituel de pondérer la réponse temporelle du filtre adapté, ce qui présente la contrepartie de dégrader le rapport signal sur bruit. Il y a donc compromis entre niveau de lobes secondaires et dégradation du rapport signal sur bruit SNR.

Enfin, dans le cadre de radars multivoies qui comportent plusieurs chaînes de réception indépendantes, il est fondamental que les réponses des ces chaînes soient identiques tant en amplitude qu'en phase. Lorsque la bande instantanée du signal est faible, les ondulations de la réponse des chaînes de réception restent très limitées dans la bande si bien que ces réponses peuvent être considérées comme constantes. On cherche alors à égaliser les réponses à l'aide d'un gain et d'une phase différentiels. Ceci n'est plus vrai lorsque la bande instantanée augmente, surtout lorsqu'on cherche à utiliser des technologies de filtrage compactes et sélectives (filtres à onde surface, céramique, ...), et l'égalisation doit alors prendre la forme d'un filtrage. En prenant comme objectif de restaurer une réponse plate pour chaque chaîne, et si on considère que le facteur de bruit des chaînes est presque intégralement réalisé en tête de chaîne, alors ce filtrage correspond au blanchiment du bruit d'une part et à un gain et une phase différentiels d'autre part.

Pour des radars à haute résolution multivoies, à large bande instantanée, un filtrage de Wiener pourrait être utilisé pour compenser les variations de gain complexe dans la bande. Le filtre correspondant s'obtient par calibrage et s'applique à la totalité du support temporel considéré. Il consiste à calculer le spectre du signal de calibrage à sa sortie de la chaîne, par transforme de Fourier discrète, et à l'inverser. Appliqué au signal utile contenant l'ensemble des échos individuels du radar, ce filtre restitue, pour chaque écho, un pic de corrélation dont la durée est unitaire. Ce filtre est donc idéal, mais il est non causal et présente un support temporel au moins égal à la durée du signal utile, en général très supérieure à la durée d'un écho individuel. Il ne peut donc pas, en particulier, être réalisé par un FIR, ce qui est pourtant impératif lorsque la durée du signal utile est très importante.

Un document US 5 014 064 A divulgue un appareil de poursuite à mono-impulsion. Un document US 2010/0194626 A1 divulgue un procédé de calcul adaptatif de coefficients de filtre de compression d'impulsion pour signal radar.

Un but de l'invention est notamment de corriger tout ou partie des inconvénients de l'art antérieur en proposant une solution permettant d'obtenir un filtre de compression d'impulsion à réponse impulsionnelle finie permettant de prendre en compte les différents défauts des voies d'émission et de réception d'un radar multivoies dans lequel il est mis en oeuvre.

A cet effet, l'invention a pour objet un procédé de détermination des paramètres d'un filtre de compression d'impulsionmis en oeuvre par un radar multivoies comprenant une voie d'émission et une pluralité de voies de réception, les signaux issus des voies de réception étant regroupés de façon à former une voie somme et au moins une voie différence, ledit filtre étant un filtre à réponse impulsionnelle finie et lesdits paramètres comprenant des filtres adaptés et des gains relatifs entre voies de réception, ledit procédé comprenant :

- Une étape Etp10 d'émission d'un signal de calibrage et d'acquisition de ce signal de calibrage après propagation à travers la voie d'émission,

- Une étape Etp20 d'injection du signal acquis, en entrée de chacune des voies de réception,

- Une étape Etp30 de mesure du signal en sortie de chaque voie de réception,

- Une étape Etp40 de calcul de la fonction de transfert des filtres adaptés à partir des signaux en sortie des voies de réception,

- Une étape Etp50 de mesure de la valeur de la puissance moyenne en sortie des différentes voies de réception et de calcul des gains relatifs $\gamma_i$ entre chacune des voies de réception et une voie de réception prédéterminée à partir desdites valeurs de puissances moyennes mesurées.

Selon une variante de mise en oeuvre, les filtres adaptés sont définis par :

$$\begin{cases} H_s(F) = \dfrac{W(F)}{C_s(F)} \cdot \sqrt{\sum W(F) \cdot |C_s(F)|^2} \\ H_d(F) = \dfrac{W(F)}{C_d(F)} \cdot \sqrt{\sum W(F) \cdot |C_d(F)|^2} \end{cases}$$

Où W(F) représente une loi de pondération définie dans le domaine fréquentiel;
Cs(F) et Cd(F) représentent respectivement le spectre du signal de calibrage, après passage dans les voies d'émission (Tx) et de réception (Rx), pour la voie somme et une voie différence.

Selon une variante de mise en oeuvre, le procédé comprend en outre une étape Etp35 de moyennage du signal acquis en sortie de chaque voie de réception afin d'améliorer le rapport signal à bruit.

Selon une variante de mise en oeuvre, la loi de pondération W(F) est lissée.

Selon une variante de mise en oeuvre, les valeurs de gains relatifs $\gamma_i$ sont intégrées dans l'expression des filtres adaptés ($H_d$) des voies différence.

L'invention a également pour objet un procédé de compression d'impulsion, mis en oeuvre par un radar multivoies comprenant une voie d'émission et une pluralité de voies de réception, les signaux issus des voies de réception étant regroupés de façon à former une voie somme et au moins une voie différence, ledit radar comprenant au moins une zone mémoire dans laquelle sont stockés les paramètres d'un filtre de compression d'impulsion déterminée par le procédé de détermination de paramètres décrit précédemment, ladite compression d'impulsion s'effectuant, pour la voie somme, en multipliant le spectre du signal S(F) en sortie de la voie somme par la fonction de transfert du filtre adapté $H_s(F)$ correspondant à la voie somme et pour une voie différence, en multipliant le spectre du signal D(F) en sortie d'une voie différence par la fonction de transfert du filtre adapté $H_d(F)$ correspondant à la voie différence considérée et par la valeur du gain relatif $\gamma_i$ correspondant à la voie différence considérée.

Selon une variante de mise en oeuvre, les valeurs de gains relatifs $\gamma_i$ sont intégrées dans l'expression des filtres adaptés ($H_d$) des voies différence et la compression d'impulsion, pour une voie différence, s'effectuant en multipliant le spectre du signal D(F) en sortie d'une voie différence par la fonction de transfert du filtre adapté $H_d$(F) correspondant à la voie différence considérée.

L'invention a également pour objet un radar multivoies comprenant une voie d'émission et une pluralité de voies de réception, la voie d'émission comprenant un coupleur connecté en sortie de ladite voie d'émission, ledit coupleur étant configuré pour prélever une partie du signal en sortie de la voie d'émission et le réinjecter en entrée de chaque voie de réception et en ce qu'il comprend au moins un module de calcul apte à mettre en oeuvre le procédé précédemment décrit pour calculer des paramètres d'un filtre de compression d'impulsion à partir du signal réinjecté dans les voies de réception et au moins un module de compression d'impulsion apte à mettre en oeuvre le procédé de compression d'impulsion précédent.

D'autres particularités et avantages de la présente invention apparaîtront plus clairement à la lecture de la description ci-après, donnée à titre illustratif et non limitatif, et faite en référence aux dessins annexés, dans lesquels :

- La figure 1 représente un synoptique simplifié d'un radar pour une voie de réception ;

- La figure 2 représente des étapes possibles du procédé selon l'invention ;

- Les figures 3a et 4a représentent deux exemples de mode de réalisation du traitement pour déterminer les paramètres du filtre de compression d'impulsion selon l'invention ;

- Les figures 3b et 4b représentent deux exemples de mode de mise en oeuvre du filtre de compression d'impulsion selon l'invention ;

- La figure 5 représente des résultats obtenus en sortie de compression d'impulsion à l'aide de différents filtres ;

- La figure 6 représente les formes temporelles des filtres adaptés utilisés ;

- La figure 7 représente des exemples de défauts de variation d'amplitude dans la chaine d'émission ;

- La figure 8 représente la forme temporelle des filtres adaptés utilisés ;

- La figure 9a représente les résultats obtenus en sortie de compression d'impulsion avec les filtres de la figure 8 ;

- La figure 9b représente un zoom des courbes de la figure 9a.

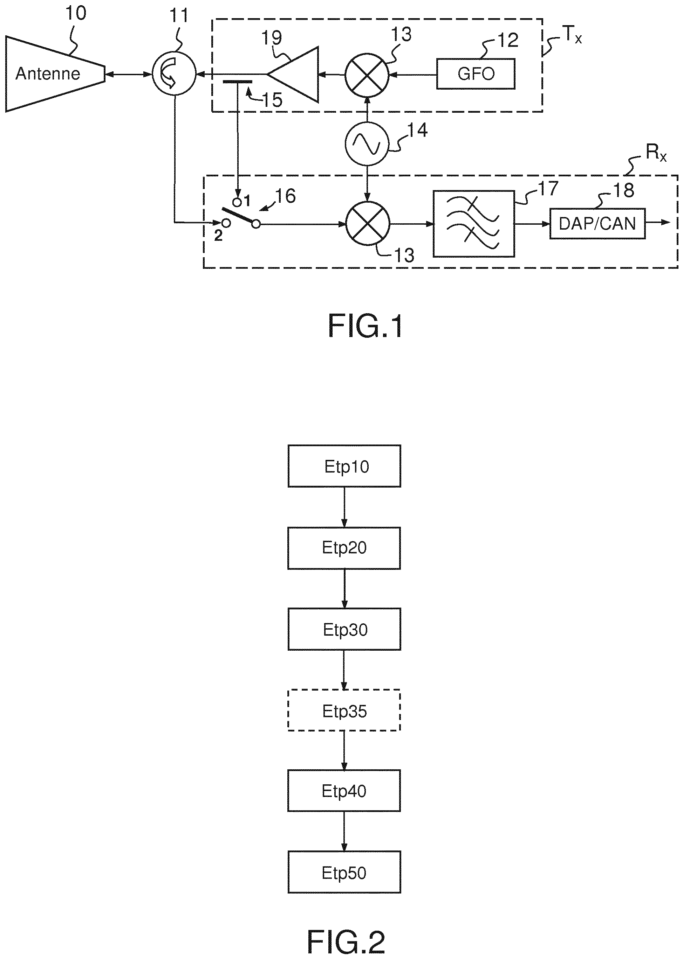

La figure 1 représente un synoptique simplifié d'un radar. Afin de ne pas surcharger la figure, seule une voie d'émission et de réception a été représentée. Cet exemple n'est nullement limitatif et peut être généralisé au cas d'un radar multivoies comprenant une pluralité de voies de réception.

Une antenne 10 est connectée à un circulateur 11 lui-même connecté à une voie d'émission Tx et une voie de réception Rx. La voie d'émission peut comprendre un générateur de forme d'onde 12 générant des signaux en bande de base qui seront ensuite modulés par l'intermédiaire d'un mélangeur 13, à l'aide de fréquences porteuses générées par la source fréquence 14. Le signal en sortie du mélangeur 13 est ensuite amplifié par un amplificateur 14. Un coupleur 15, connecté à la sortie de l'amplificateur 14, permet de prélever une partie du signal amplifié et de le rediriger vers un commutateur 16 placé en entrée de la chaine de réception Rx. Dans cet exemple ce commutateur 16 comporte deux positions. Une première position, référencée 1 sur la figure, permet d'injecter le signal en sortie de la voie d'émission, par l'intermédiaire du coupleur 15, en entrée de la chaine de réception Rx. Cette position sert au calibrage du radar et permet de calculer les paramètres du filtre de compression d'impulsion. La seconde position, référencée 2, sert à l'usage normale du radar et permet de diriger le signal provenant de l'antenne 10 vers la chaine de réception Rx. La chaine de réception peut comprendre un mélangeur 13 permettant de transposer le signal à l'aide de la porteuse générée par la source de fréquence 14. Le signal est ensuite filtré à travers un filtre 17 puis est démodulé et converti en un signal numérique à l'aide d'un Démodulateur Amplitude Phase et d'un Convertisseur Analogique Numérique (ou DAP/CAN) 18.

Les signaux issus des voies de réception (Rx) sont regroupés suivant des techniques de recombinaison connues de l'homme du métier, pour former une voie somme et au moins une voie différence.

Les signaux opérationnels reçus par l'antenne 10 peuvent être modélisés par les expressions :

$$\begin{cases} S = K.\,G_s(\theta).\,\sqrt{SER}.\,e^{i\,\varphi_s}.\,A_s(t) \otimes p(t) \\ D = K.\,G_d(\theta).\,\sqrt{SER}.\,e^{i\,\varphi_d}.\,A_d(t) \otimes p(t) \end{cases}$$

De même les signaux de calibration peuvent être modélisés par :

$$\begin{cases} C_s = B.\,e^{i\,\varphi_s}.\,A_s(t) \otimes p(t) \\ C_d = B.\,e^{i\,\varphi_d}.\,A_d(t) \otimes p(t) \end{cases}$$

Où:

- B, représente l'amplitude du signal de calibrage, supposée inconnue ;
- p(t), représente l'impulsion radar de durée T telle que $|p(t)|=1$ pour $0<t<T$ ;
- $A_s(t)$, représente la réponse impulsionnelle de la chaîne de la voie Somme du radar ;
- $A_d(t)$, représente la réponse impulsionnelle de la chaîne d'une des voies Différence du radar ;
- K, représente une constante provenant de l'équation radar ;
- $Gs(\theta)$ et $Gd(\theta)$, représente le gain complexe de l'antenne dans la direction $\theta$ supposé indépendant de la fréquence ;
- SER, représente la Surface Equivalente Radar d'une cible ;
- $\varphi_s$ et $\varphi_d$ représentent les erreurs de phase de la chaîne pour les voies Somme et Différences ;
- $\otimes$, représente l'opérateur de convolution ;

En effectuant une transformée de Fourier sur chacun de ces signaux, on obtient :

$$\begin{cases} S(F) = K.\,G_s(\theta).\,\sqrt{SER}.\,e^{i\,\varphi_s}.\,A_s(F).\,P(F) \\ D(F) = K.\,G_d(\theta).\,\sqrt{SER}.\,e^{i\,\varphi_d}.\,A_d(F).\,P(F) \end{cases}$$

et

$$\begin{cases} C_s(F) = B.\,e^{i\,\varphi_s}.\,A_s(F).\,P(F) \\ C_d(F) = B.\,e^{i\,\varphi_d}.\,A_d(F).\,P(F) \end{cases}$$

où $A_S(F)$ et $A_D(F)$ représentent respectivement les gains complexes des voies Somme et Différence.
Les filtres adaptés pondérés et normalisés (indépendants du niveau B de calibrage) pour chacune des voies peuvent être définis par :

$$\begin{cases} H_s(F) = \dfrac{W(F)}{C_s(F)}.\,\sqrt{\sum W(F).\,|C_s(F)|^2} \\ H_d(F) = \dfrac{W(F)}{C_d(F)}.\,\sqrt{\sum W(F).\,|C_d(F)|^2} \end{cases}$$

Où W(f) est une loi de pondération quelconque définie dans le domaine spectrale, comme par exemple une loi de Blackman, une loi de Hanning, une loi de Hamming, de Taylor ou toute autre loi équivalente ainsi que toute combinaison de lois connues de l'homme du métier.
Afin de limiter les phénomènes de Gibbs, c'est-à-dire les rebonds temporels liés à la troncature brutale du spectre, cette loi de pondération spectrale peut être lissée afin d'atténuer la discontinuité à la transition entre la bande utile et la zone hors bande. Ce lissage peut être obtenu, par exemple en appliquant, à la pondération W(f), une convolution avec une autre fenêtre de pondération, comme par exemple et de façon non limitative, une fenêtre de Hanning, mais de longueur beaucoup plus courte que W(f). Cette longueur peut par exemple être de l'ordre de 1/32e ou 1/64e de la longueur de W(f).
Les gains relatifs $\gamma$ peuvent être définis par :

$$\gamma = \frac{\sqrt{\sum W(F).\,|C_s(F)|^2}}{\sqrt{\sum W(F).\,|C_d(F)|^2}} = \frac{\sqrt{\sum W(F).\,|A_s(F).P(F)|^2}}{\sqrt{\sum W(F).\,|A_d(F).P(F)|^2}}$$

La compression d'impulsion peut être réalisée, pour la voie Somme, en effectuant :

$$CI_s(F) = S(F).H_s(F) = K.G_s(\theta).\sqrt{SER}.W(F).\frac{\sqrt{\sum W(F).\,|C_s(F)|^2}}{B}$$

$$\Rightarrow CI_s(F) = K.G_s(\theta).\sqrt{SER}.W(F).\sqrt{\sum W(F).\,|A_s(F).P(F)|^2}$$

De la même façon, pour les voies Différences, on peut calculer :

$$CI_d(F) = \gamma.D(F).H_d(F) = K.G_d(\theta).\sqrt{SER}.W(F).\sqrt{\sum W(F).\,|A_s(F).P(F)|^2}$$

Où $Ci_s(F)$ et $Ci_d(F)$ représentent le spectre du signal comprimé respectivement pour la voie Somme et pour une voie Différence ;

Le signal comprimé s'obtient en effectuant la transformée de Fourier inverse sur les signaux $CI_s(F)$ et $CI_d(F)$.

En fonction des choix pratiques d'implémentation, une variante peut consister à prendre en compte les gains relatifs $\gamma$ directement dans l'expression du filtre $H_d(F)$ ce qui permet de simplifier l'expression de la compression d'impulsion qui devient : $CI_d(F) = D(F).Hd(F)$.

A l'issue de ces opérations, on peut constater que les lobes secondaires sont maitrisés puisque c'est la réponse théorique qui est restituée, $CI_s(F)$ et $CI_d(F)$ ne dépendent pas des réponses impulsionnelles $A_s(F)$, $A_d(F)$ de la chaîne des voies somme et différences du radar.

Le fait d'appliquer au signal un filtre ayant pour forme $1/S(F)$ où $S(F)$ représente le spectre du signal, fait qu'en sortie on trouve un rectangle spectral de largeur la bande de fréquence que l'on traite. La transformée inverse de ce signal est un signal sinus cardinal. L'application d'une pondération dans le filtre fait que l'on trouve un sinus cardinal pondéré. Le choix de la fenêtre de pondération va donc permettre de maitriser les niveaux de lobe secondaire.

On peut également remarquer qu'il n'y a pas de gain différentiel entre les voies Somme et Différence, au gain d'antenne près, ce qui permet de calculer les écartométries angulaires (technique monopulse) : la compensation en amplitude s'effectuent via les gains relatifs $\gamma$ et la compensation en phase s'obtenant naturellement par principe puisque la phase de chaque voie est ramenée à zéro en appliquant les filtres adaptés $H_S$ et $H_d$.

La figure 2 illustre des étapes possibles du procédé de détermination de paramètres d'un filtre de compression d'impulsion selon l'invention.

Les paramètres du filtre de compression peuvent comprendre le filtre adapté $H_s$ à la voie somme, les filtres adaptés $H_d$ à la voie différence et les gains relatifs $\gamma_i$ entre une voie de réception prédéterminée choisie comme voie de référence et chacunes des autre voies de réception.

Un signal de calibrage est émis par un générateur de la voie d'émission Tx au cours d'une étape Etp10. Ce signal est ensuite acquis en sortie de la voie d'émission Tx. Ceci permet de mesurer, en plus du signal émis, tous les défauts liés aux différentes composantes de la chaine d'émission Tx.

Le signal acquis est ensuite injecté en entrée de chaque voie de réception Rx au cours d'une étape Etp20. Après avoir traversé la chaine de réception, les signaux sont ensuite mesurés en sortie de chaque chaine de réception Rx pendant une étape Etp30.

Afin d'améliorer le rapport signal à bruit, le procédé peut comprendre une étape Etp35 de moyennage du signal en sortie de chaque voie de réception.

Le procédé comporte ensuite une étape Etp40 de calcul de la fonction de transfert des filtres adaptés pondérés et normalisés $H_s$, $H_d$, pour chacune des voies à partir des signaux mesurés en sorties de chaque voie de réception Rx. La fonction de transfert de ces filtres adaptés pour la voie somme $H_s$ et pour une voie différence $H_d$ peut être définie par :

$$
\begin{cases}
H_s(F) = \dfrac{W(F)}{C_s(F)} \cdot \sqrt{\sum W(F) \cdot |C_s(F)|^2} \\[4mm]
H_d(F) = \dfrac{W(F)}{C_d(F)} \cdot \sqrt{\sum W(F) \cdot |C_d(F)|^2}
\end{cases}
$$

Où W(f) représente une loi de pondération quelconque définie dans le domaine fréquentiel;

Cs(F) et Cd(F) représentent le signal de calibrage dans le domaine fréquentiel, après passage dans les voies d'émission et de réception, respectivement pour la voie somme et une voie différence.

Dans cette expression des filtres adaptés à l'impulsion $H_s$, $H_d$, on remarque que l'on retrouve la forme d'un filtre de Wiener à travers le terme $\dfrac{1}{C_s(F)}$ qui correspond à l'inverse du signal de calibrage.

En développant l'expression des filtres, on peut montrer que ces filtres $H_s$, $H_d$ sont indépendant du niveau du signal de calibrage.

De façon avantageuse, le choix de la loi de pondération permet de maitriser les lobes secondaires. Toute dépendance aux défauts des chaines d'émission et de réception étant supprimée, les lobes secondaires ne vont dépendre que du choix de la loi de pondération. Cette loi de pondération ou fenêtre de pondération est choisie en fonction de l'application et du niveau nécessaire. A titre d'exemple, si des lobes de -13 dB sont tolérés, une fenêtre rectangle pourra être choisie. Si des niveaux inférieurs sont souhaités, on pourra choisir par exemple une pondération de Hanning, de Hamming, de Taylor ou toute autre loi de pondération, ou combinaison de lois, connue de l'homme du métier.

La compression d'impulsion est réalisée sur un radar multivoies. Un problème est que chaque voie de réception a des défauts différents liés à la dispersion des matériels. Afin de pouvoir faire des traitements radar multivoies comme par exemple de l'écartométrie, des traitements monopulse, il est nécessaire d'équilibrer les différentes voies de réception entre elles. Le procédé comprend donc une étape d'équilibrage des voies de réception Rx afin de maitriser les gains relatifs entre voies.

A cet effet, le procédé comprend une étape Etp50 de mesure des gains relatifs entre les différentes voies de réception Rx. Une voie de réception est prise comme référence et, à partir de la puissance moyenne mesurée en sortie de chaque voie de réception, la valeur des gains relatifs $\gamma_i$ entre chaque voie de réception Rx et la voie de réception prise comme voie de référence est mesurée. Ces gains relatifs $\gamma_i$ sont les gains de la voie de réception Rx indépendamment de l'antenne 10 du radar.

Ces différents paramètres du filtre de compression d'impulsion peuvent, par exemple, être enregistrés dans une zone mémoire du radar pour être réutilisés.

De façon avantageuse, la phase de calibrage d'un radar selon l'invention ne nécessite aucun moyen extérieur au radar (étalonnage à bord ou *on-line* selon la terminologie anglo saxonne) et permet de s'affranchir des variations de température lors de l'utilisation du radar ou du remplacement d'une carte électronique composant la chaine radar. Ce calibrage peut être réalisé de façon périodique ou apériodique.

Le procédé de détermination de paramètres de filtre de compression d'impulsion selon l'invention peut être mis en oeuvre par un ou plusieurs modules de calcul du radar. De même, la compression d'impulsion peut être mise en oeuvre par un module de calcul, par exemple un module de compression d'impulsion, dédié ou non. Ces modules peuvent être un ou plusieurs microprocesseurs, processeurs, ordinateurs ou tous autres moyens équivalents programmés de façon opportune.

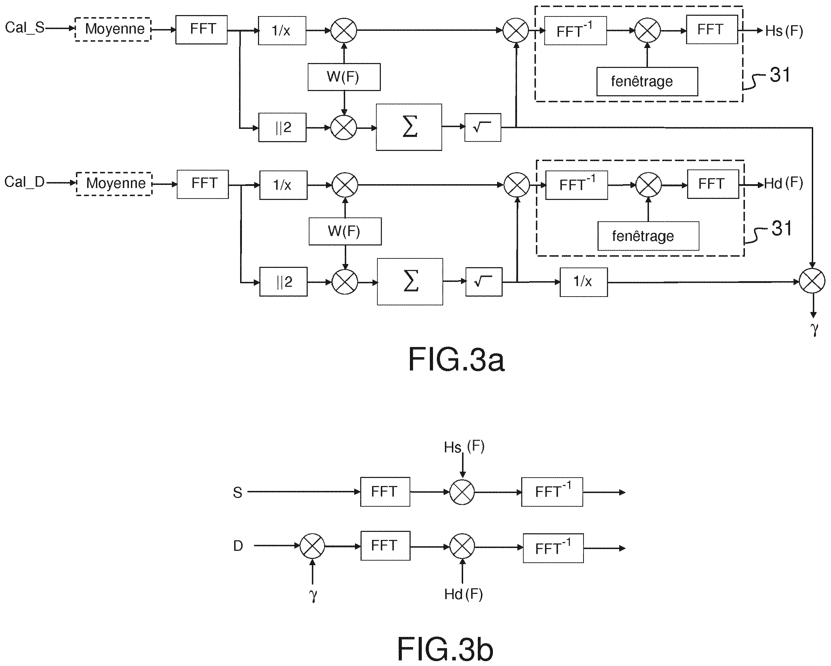

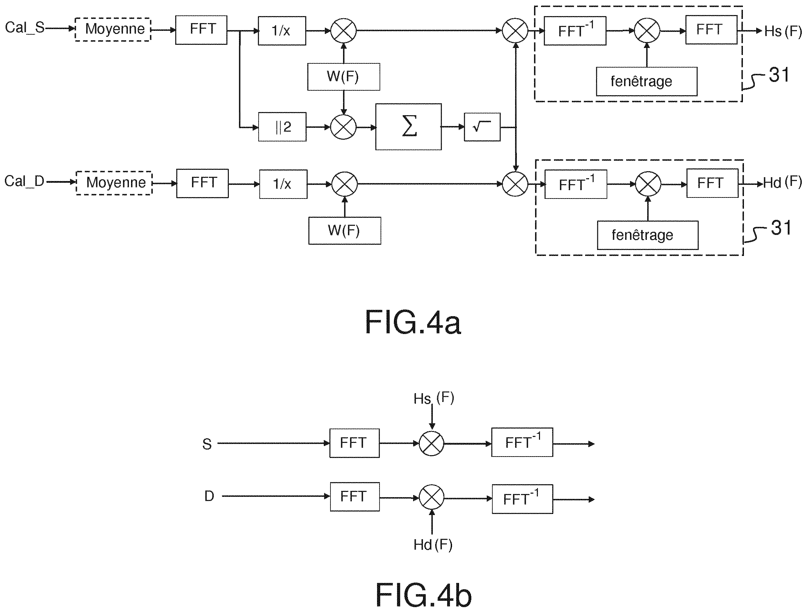

Les figures 3a et 4a représentent deux exemples de mode de réalisation du traitement pour déterminer des paramètres du filtre de compression d'impulsion selon l'invention à partir des signaux de calibrage de la voie somme Cal_S et d'une voie différence Cal_D. La figure ne représente qu'une voie différence mais le traitement peut être généralisé au cas où plusieurs voies différences seraient présentes.

Dans le traitement illustré figure 3a les filtres adaptés à l'impulsion $H_s$ et $H_d$ et les gains relatifs $\gamma$ sont calculés séparément.

La figure 4a représente une variante de réalisation dans laquelle les gains relatifs $\gamma_i$ sont directement intégrés dans l'expression des filtres adaptés des voies différences $H_d$.

Dans les deux modes de réalisation, une opération de fenêtrage 31 est appliquée aux filtres adaptés à l'impulsion $H_s$ et $H_d$ afin que filtre soit un filtre à durée finie. Cette opération de fenêtrage 31 consiste à effectuer une transposition du signal dans le domaine temporel à l'aide d'une transformée de Fourier inverse, à multiplier le signal obtenu par une fenêtre temporelle et à retransposer le signal dans le domaine fréquentiel.

Les figures 3b et 4b représentent deux exemples de mode de mise en oeuvre des filtres de compression d'impulsion dont la détermination des paramètres est illustrée respectivement figure 3a et 4a.

Dans le mode de réalisation de la figure 3b le signal temporel S issu de la voie somme subit une transformée de Fourier, est multiplié par le filtre $H_s(F)$ puis subit une transformée de Fourier inverse pour revenir dans le domaine temporel.

Le signal temporel D issu de chaque voie différence est multiplié par le gain relatif $\gamma$ correspondant à la voie différence considérée, subit une transformée de Fourier, est multipliée par le filtre adapté $H_d(F)$ correspondant à la voie différence considérée puis est transposé dans le domaine temporel par l'intermédiaire d'une transformée de Fourier inverse.

Dans le mode de réalisation de la figure 4b, le gain relatif $\gamma$ correspondant à la voie différence considérée étant intégré dans l'expression du filtre adapté de la voie différence $H_d(F)$, le signal temporel D issu de chaque voie différence est seulement multiplié par le filtre adapté $H_d(F)$ correspondant à la voie différence considérée après avoir été transposé dans le domaine fréquentiel par une transformée de Fourier. Il subira ensuite une transformée de Fourier inverse pour revenir dans le domaine temporel.

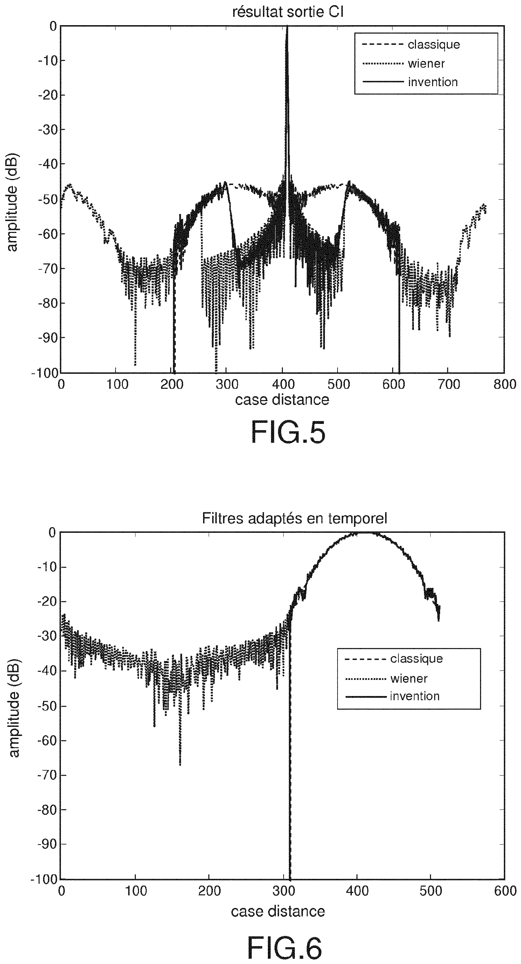

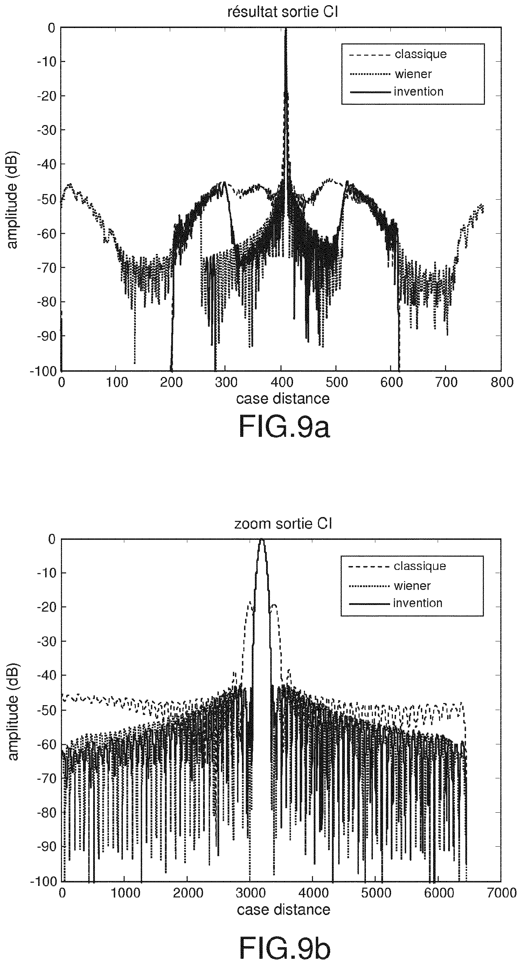

Les figures 5 et 9a, 9b illustrent des exemples de résultats obtenus en appliquant un filtre de compression selon l'invention.

La figure 5 représente les résultats obtenus en sortie de compression d'impulsion avec un filtre de compression classique, un filtre de Wiener et le filtre de compression selon l'invention dans le cas d'une chaine d'émission Tx et de réception Rx ne présentant pas de défaut.

La figure 6 représente la forme temporelle des filtres utilisés.

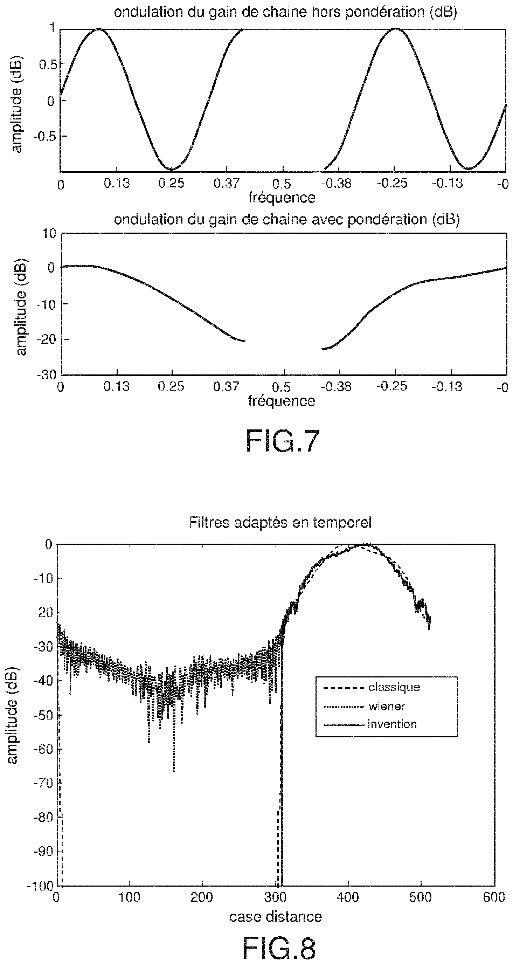

La figure 7 est une représentation graphique de défauts des voies d'émission Tx et de réception Rx. Ces défauts sont essentiellement des variations d'amplitude. La figure 8 présente la forme temporelle des filtres adaptés utilisés.

Comme précédemment, la figure 9a compare les résultats obtenus en sortie de compression d'impulsion avec les filtres classiques, de Wiener et celui selon l'invention. La figure 9b est un zoom de la figure 9a autour du lobe principal.

Sur la figure 9b, on remarque que l'utilisation du filtre adapté classique amplifie les erreurs introduites par les chaines d'émission et de réception. La figure 9a montre que si on applique le filtre de Wiener, on obtient un lobe principal propre mais on observe un trainage avec les remontées.

L'utilisation du filtre selon l'invention permet d'obtenir en sortie de compression d'impulsions à la fois une maitrise du lobe principal et une maitrise des lobes de la compression d'impulsion sans avoir de trainage. On retrouve les niveaux que l'on aurait avec un filtre adapté classique en l'absence de déformation spectrale par la chaine de réception.

L'invention a notamment comme avantage de permettre d'obtenir une réponse temporelle courte permettant une réalisation de type FIR, réalisation particulièrement bien adaptée à une implémentation sur un circuit logique programmable comme par exemple un FPGA.

Un autre avantage de l'invention est qu'elle utilise une réplique du signal radar enregistrée lors d'une phase de calibrage radar faite de façon autonome par celui-ci, sans nécessiter de moyens extérieurs au radar ni d'effectuer un calibrage spécifique en usine sur chaque matériel.

### Revendications

1. Procédé de détermination de paramètres d'un filtre de compression d'impulsion, mis en oeuvre par un radar multivoies comprenant une voie d'émission (Tx) et une pluralité de voies de réception (Rx), les signaux issus des voies de réception (Rx) étant regroupés de façon à former une voie somme et au moins une voie différence, ledit filtre étant un filtre à réponse impulsionnelle finie et lesdits paramètres comprenant des filtres adaptés ($H_s$, $H_d$) et des gains relatifs ($\gamma_i$) entre voies de réception (Rx), ledit procédé étant **caractérisé en ce qu'**il comprend :

   - Une étape Etp10 d'émission d'un signal de calibrage et d'acquisition de ce signal de calibrage après propagation à travers la voie d'émission,
   - Une étape Etp20 d'injection du signal acquis, en entrée de chacune des voies de réception (Rx),
   - Une étape Etp30 de mesure du signal en sortie de chaque voie de réception (Rx),
   - Une étape Etp40 de calcul de la fonction de transfert des filtres adaptés ($H_s$, $H_d$) à partir des signaux en sortie des voies de réception (Rx),
   - Une étape Etp50 de mesure de la valeur de la puissance moyenne en sortie des différentes voies de réception (Rx) et de calcul des gains relatifs $\gamma_i$ entre chacune des voies de réception (Rx) et une voie de réception prédéterminée à partir desdites valeurs de puissances moyennes mesurées.

2. Procédé selon la revendication précédente dans lequel les filtres adaptés ($H_s$, $H_d$) sont définis par :

$$\begin{cases} H_s(F) = \dfrac{W(F)}{C_s(F)} \cdot \sqrt{\sum W(F).|C_s(F)|^2} \\[4mm] H_d(F) = \dfrac{W(F)}{C_d(F)} \cdot \sqrt{\sum W(F).|C_d(F)|^2} \end{cases}$$

Où W(F) représente une loi de pondération définie dans le domaine fréquentiel;
Cs(F) et Cd(F) représentent respectivement le spectre du signal de calibrage, après passage dans les voies d'émission (Tx) et de réception (Rx), pour la voie somme et une voie différence.

3. Procédé selon une des revendications précédentes dans lequel le procédé comprend en outre une étape Etp35 de moyennage du signal acquis en sortie de chaque voie de réception (Rx) afin d'améliorer le rapport signal à bruit.

4. Procédé selon une des revendications 2 ou 3 dans lequel la loi de pondération W(F) est lissée.

5. Procédé selon une des revendications précédentes dans lequel les valeurs de gains relatifs $\gamma_i$ sont intégrées dans l'expression des filtres adaptés (H$_d$) des voies différence.

6. Procédé de compression d'impulsion, mis en oeuvre par un radar multivoies comprenant une voie d'émission (Tx) et une pluralité de voies de réception (Rx), les signaux issus des voies de réception (Rx) étant regroupés de façon à former une voie somme et au moins une voie différence, ledit radar comprenant au moins une zone mémoire dans laquelle sont stockés les paramètres (H$_s$, H$_d$, $\gamma_i$) d'un filtre de compression d'impulsion déterminée par le procédé de détermination de paramètres selon une des revendications 1 à 4, ledit procédé de compression d'impulsion étant **caractérisé en ce que** ladite compression d'impulsion s'effectue, pour la voie somme, en multipliant le spectre du signal S(F) en sortie de la voie somme par la fonction de transfert du filtre adapté H$_s$(F) correspondant à la voie somme et pour une voie différence, en multipliant le spectre du signal D(F) en sortie d'une voie différence par la fonction de transfert du filtre adapté H$_d$(F) correspondant à la voie différence considérée et par la valeur du gain relatif $\gamma_i$ correspondant à la voie différence considérée.

7. Procédé selon la revendication précédente dans lequel les paramètres (H$_s$, H$_d$, $\gamma_i$) d'un filtre de compression d'impulsion sont déterminés par le procédé de détermination de paramètres selon la revendication 5, la compression d'impulsion, pour une voie différence, s'effectuant en multipliant le spectre du signal D(F) en sortie d'une voie différence par la fonction de transfert du filtre adapté H$_d$(F) correspondant à la voie différence considérée.

8. Radar multivoies comprenant une voie d'émission (Tx) et une pluralité de voies de réception (Rx), ledit radar étant **caractérisé en ce que** la voie d'émission comprend un coupleur (15) connecté en sortie de ladite voie d'émission (Tx), ledit coupleur (15) étant configuré pour prélever une partie du signal en sortie de la voie d'émission (Tx) et le réinjecter en entrée de chaque voie de réception (Rx) et **en ce qu'**il comprend au moins un module de calcul apte à mettre en oeuvre le procédé selon une des revendications 1 à 5 pour calculer des paramètres d'un filtre de compression d'impulsion à partir du signal réinjecté dans les voies de réception et au moins un module de compression d'impulsion apte à mettre en oeuvre le procédé selon une des revendications 6 ou 7.

**Patentansprüche**

1. Verfahren zum Bestimmen von Parametern eines Impulskompressionsfilters, durchgeführt von einem Mehrkanalradar, das einen Sendekanal (Tx) und mehrere Empfangskanäle (Rx) umfasst, wobei die Signale von den Empfangskanälen (Rx) so gruppiert werden, dass ein Summenkanal und wenigstens ein Differenzkanal entstehen, wobei das Filter ein Filter mit endlicher Impulsantwort ist und die Parameter adaptierte Filter (H$_s$, H$_d$) und relative Verstärkungen (y$_i$) zwischen Empfangskanälen (Rx) haben, wobei das Verfahren **dadurch gekennzeichnet ist, dass** es Folgendes beinhaltet:

   - einen Schritt Etp10 des Sendens eines Kalibrationssignals und des Erfassens dieses Kalibrationssignals nach der Ausbreitung durch den Sendekanal,
   - einen Schritt Etp20 des Injizierens des erfassten Kanals am Eingang von jedem der Empfangskanäle (Rx),
   - einen Schritt Etp30 des Messens des Signals am Ausgang jedes Empfangskanals (Rx),
   - einen Schritt Etp40 des Berechnens der Übertragungsfunktion der adaptierten Filter (H$_s$, H$_d$) auf der Basis der Signale am Ausgang der Empfangskanäle (Rx),

- einen Schritt Etp50 des Messens des Wertes der mittleren Leistung am Ausgang der verschiedenen Empfangskanäle (Rx) und des Berechnens der relativen Verstärkungen $y_i$ zwischen jedem der Empfangskanäle (Rx) und einem vorbestimmten Empfangskanal auf der Basis der gemessenen mittleren Leistungswerte.

**2.** Verfahren nach dem vorherigen Anspruch, bei dem die adaptierten Filter ($H_s$, $H_d$) definiert werden durch:

$$\begin{cases} H_s(F) = \dfrac{W(F)}{C_s(F)} \cdot \sqrt{\sum W(F).|C_s(F)|^2} \\ H_d(F) = \dfrac{W(F)}{C_d(F)} \cdot \sqrt{\sum W(F).|C_d(F)|^2} \end{cases}$$

wobei W(F) ein in der Frequenzdomäne definiertes Wichtungsgesetz repräsentiert;
Cs(F) und Cd(F) jeweils das Spektrum des Kalibrationssignals nach der Passage in den Sende-(Tx)- und Empfangs-(Rx)-Kanälen für den Summenkanal und einen Differenzkanal repräsentieren.

**3.** Verfahren nach einem der vorherigen Ansprüche, bei dem das Verfahren ferner einen Schritt Etp35 des Mittelwertbildens des erfassten Signals am Ausgang jedes Empfangskanals (Rx) um das Signal-Rausch-Verhältnis zu verbessern beinhaltet.

**4.** Verfahren nach Anspruch 2 oder 3, bei dem das Wichtungsgesetz W(F) geglättet wird.

**5.** Verfahren nach einem der vorherigen Ansprüche, bei dem die relativen Verstärkungswerte $y_i$ in den Ausdruck der adaptierten Filter ($H_d$) der Differenzkanäle integriert werden.

**6.** Impulskompressionsverfahren, durchgeführt von einem Mehrkanalradar, umfassend einen Sendekanal (Tx) und mehrere Empfangskanäle (Rx), wobei die Signale von den Empfangskanälen (Rx) so gruppiert werden, dass ein Summenkanal und wenigstens ein Differenzkanal entstehen, wobei das Radar wenigstens eine Speicherzone umfasst, in der die Parameter ($H_s$, $H_d$, $y_i$) eines Impulskompressionsfilters gespeichert sind, bestimmt mit dem Parameterbestimmungsverfahren nach einem der Ansprüche 1 bis 4, wobei das Impulskompressionsverfahren **dadurch gekennzeichnet ist, dass** die Impulskompression für den Summenkanal durch Multiplizieren des Spektrums des Signals S(F) am Ausgang des Summenkanals mit der Übertragungsfunktion des adaptierten Filters $H_s$(F) entsprechend dem Summenkanal und für einen Differenzkanal durch Multiplizieren des Spektrums des Signals D(F) am Ausgang eines Differenzkanals mit der Übertragungsfunktion des adaptierten Filters $H_d$(F) entsprechend dem betrachteten Differenzkanal und mit dem Wert der relativen Verstärkung $y_i$ entsprechend dem betrachteten Differenzkanal erfolgt.

**7.** Verfahren nach dem vorherigen Anspruch, bei dem die Parameter ($H_s$, $H_d$, $y_i$) eines Impulskompressionsfilters mit dem Parameterbestimmungsverfahren nach Anspruch 5 bestimmt werden, wobei die Impulskompression für einen Differenzkanal durch Multiplizieren des Spektrums des Signals D(F) am Ausgang eines Differenzkanals mit der Übertragungsfunktion des adaptierten Filters $H_d$(F) entsprechend dem betrachteten Differenzkanal erfolgt.

**8.** Mehrkanalradar, das einen Sendekanal (Tx) und mehrere Empfangskanäle (Rx) umfasst, wobei das Radar **dadurch gekennzeichnet ist, dass** der Sendekanal einen Koppler (15) umfasst, der mit dem Ausgang des Sendekanals (Tx) verbunden ist, wobei der Koppler (15) zum Abnehmen eines Teils des Signals am Ausgang des Sendekanals (Tx) und zum Neuinjizieren desselben am Eingang jedes Empfangskanals (Rx) konfiguriert ist, und dadurch, dass er wenigstens ein Rechenmodul zum Durchführen des Verfahrens nach einem der Ansprüche 1 bis 5 zum Berechnen der Parameter eines Impulskompressionsfilters auf der Basis des in den Empfangskanälen neu injizierten Signals und wenigstens ein Impulskompressionsmodul umfasst, das das Verfahren nach Anspruch 6 oder 7 ausführen kann.

**Claims**

**1.** A method for determining parameters of a pulse compression filter, implemented by a multi-channel radar comprising a transmission channel (Tx) and a plurality of reception channels (Rx), the signals arising from the reception channels (Rx) being grouped together so as to form a sum channel and at least one difference channel, said filter being a finite impulse response filter and said parameters comprising matched filters ($H_s$, $H_d$) and relative gains ($\gamma_i$) between reception channels (Rx), said method being **characterized in that** it comprises:

- A step Etp10 of transmitting a calibration signal and of acquiring this calibration signal after propagation through the transmission channel,
- A step Etp20 of injecting the signal acquired, at the input of each of the reception channels (Rx),
- A step Etp30 of measuring the signal at the output of each reception channel (Rx),
- A step Etp40 of calculating the transfer function of the matched filters ($H_s$, $H_d$) on the basis of the signals at the output of the reception channels (Rx),
- A step Etp50 of measuring the value of the average power at the output of the various reception channels (Rx) and of calculating the relative gains $\gamma_i$ between each of the reception channels (Rx) and a predetermined reception channel on the basis of said measured values of average powers.

2. The method as claimed in one of the preceding claims, in which the matched filters ($H_s$, $H_d$) are defined by:

$$\begin{cases} H_s(F) = \dfrac{W(F)}{C_s(F)} \cdot \sqrt{\sum W(F).|C_s(F)|^2} \\ H_d(F) = \dfrac{W(F)}{C_d(F)} \cdot \sqrt{\sum W(F).|C_d(F)|^2} \end{cases}$$

where W(F) represents a weighting law defined in the frequency domain;
Cs(F) and Cd(F) represent respectively the spectrum of the calibration signal, after passing through the transmission (Tx) and reception (Rx) channels, for the sum channel and a difference channel.

3. The method as claimed in one of the preceding claims, in which the method furthermore comprises a step Etp35 of averaging the signal acquired at the output of each reception channel (Rx) so as to improve the signal-to-noise ratio.

4. The method as claimed in either of claims 2 or 3, in which the weighting law W(F) is smoothed.

5. The method as claimed in one of the preceding claims, in which the values of relative gains $\gamma_i$ are integrated into the expression for the matched filters ($H_d$) of the difference channels.

6. A method of pulse compression, implemented by a multi-channel radar comprising a transmission channel (Tx) and a plurality of reception channels (Rx), the signals arising from the reception channels (Rx) being grouped together so as to form a sum channel and at least one difference channel, said radar comprising at least one memory area in which are stored the parameters ($H_s$, $H_d$, $\gamma_i$) of a pulse compression filter determined by the method for determining parameters as claimed in one of claims 1 to 4, said method of pulse compression being **characterized in that** said pulse compression is performed, for the sum channel, by multiplying the spectrum of the signal S(F) at the output of the sum channel by the transfer function of the matched filter $H_s(F)$ corresponding to the sum channel and for a difference channel, by multiplying the spectrum of the signal D(F) at the output of a difference channel by the transfer function of the matched filter $H_d(F)$ corresponding to the difference channel considered and by the value of the relative gain $\gamma_i$ corresponding to the difference channel considered.

7. The method as claimed in the preceding claim, in which the parameters ($H_s$, $H_d$, $\gamma_i$) of a pulse compression filter are determined by the method for determining parameters as claimed in claim 5, the pulse compression, for a difference channel, being performed by multiplying the spectrum of the signal D(F) at the output of a difference channel by the transfer function of the matched filter $H_d(F)$ corresponding to the difference channel considered.

8. A multi-channel radar comprising a transmission channel (Tx) and a plurality of reception channels (Rx), said radar being **characterized in that** the transmission channel comprises a coupler (15) connected at the output of said transmission channel (Tx), said coupler (15) being configured to tap off a part of the signal at the output of the transmission channel (Tx) and reinject it at the input of each reception channel (Rx) and **in that** it comprises at least one calculation module able to implement the method as claimed in one of claims 1 to 5 to calculate parameters of a pulse compression filter on the basis of the signal reinjected in the reception channels and at least one pulse compression module able to implement the method as claimed in either of claims 6 or 7.

FIG.1

FIG.2

FIG.3a

FIG.3b

FIG.4a

FIG.4b

résultat sortie CI

FIG.5

Filtres adaptés en temporel

FIG.6

ondulation du gain de chaine hors pondération (dB)

ondulation du gain de chaine avec pondération (dB)

FIG.7

Filtres adaptés en temporel

FIG.8

résultat sortie CI

FIG.9a

zoom sortie CI

FIG.9b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5014064 A
- US 20100194626 A1